# EUROPÄISCHE PATENTANMELDUNG

(11) **EP 2 120 184 A1**
(43) Veröffentlichungstag der Anmeldung: **18.11.2009**
(21) Anmeldenummer: 09006194.6
(22) Anmeldetag: 07.05.2009
(51) Int. Cl.: G06K 9/62

(54) **Optisches System bzw. Verfahren zur verbesserten Zielerkennung**

(30) Priorität: 13.05.2008 DE 102008023269
(71) Anmelder: Rheinmetall Waffe Munition GmbH, 29345 Unterlüss (DE)
(72) Erfinder: Körver, Rolf, 78112 St. Georgen (DE)
(74) Vertreter: Dietrich, Barbara

(57) **Zusammenfassung**

Vorgeschlagen werden ein System (1) sowie ein Verfahren, bei welchem die aus modernen Grafikkarten bekannte Darstellung von Schattenwirkungen invertiert werden, um die Oberflächenstrukturen unbekannter Objekte (6) aus ihren Schattenbildern abzuleiten, wobei auf Basis der Schattenwirkung und der bekannten Oberflächenstruktur des Referenzobjekts (7) die Lichtquelle(n) ermittelt werden / wird.

## Beschreibung

Zur besseren Zielerkennung sowie zum Vermessen biometrischer Daten etc. sind in der Regel 3D- Abbildungen (Reliefs) notwendig. Ein so genanntes 3D- Relief wird durch einen Laser ausgelesen und die Tiefeninformation Pixel für Pixel erfasst. Der zur Aufnahme des Reliefs notwendige Sensoraufwand (Sensormix) ist sehr hoch. Insbesondere bei Bewegung der Kamera können die Sensoren nicht auf gleicher optischer Achse eingebunden werden.

Bei der Zielerkennung mit einer herkömmlichen TV- Kamera (2D) ist man zudem auf die Auswertung eines Flächenbildes festgelegt. Aufgrund des Fehlens der dritten Dimension ist eine genaue Zielerkennung im Raum nicht möglich. Diese Problematik wird besonders deutlich bei der Personenerkennung auf der Basis von Referenzaufnahmen mit dem Hintergrund der Auswertung biometrischer Daten. Die Merkmale verändern sich in dem aktuellen Bild durch die Belichtung und einer damit verbundenen Schattenwirkung. Diese auch als Verfälschung bekannte Ursprungssignatur kann nur durch 3D- Informationen über die Position des Zielobjekts im Raum erkannt und korrigiert werden.

Dieses Problem wird u. a. durch die Gewinnung von 3D- Informationen durch Spurbildung mit Hilfe eines Zieltrackers oder Ergänzung der TV- Kamera durch Sensoren zur Entfernungsmessung angegangen. Bei dem ersten Verfahren werden kontinuierlich gewonnene Bilder des Zielobjekts aneinander gereiht, um Informationen über die Zielbewegung zu gewinnen. Bei der zweiten Methode werden die Flächeninformationen um separat gewonnene Entfernungsinformationen ergänzt. Beide Varianten können auch kombiniert eingesetzt werden.

Die bisher verwendeten Verfahren benutzten mehrere Sensorkombinationen, um das Flächenbild mit Entfernungsinformationen anzureichern. Die Entfernungsinformationen für jedes Bildpixel mit der geforderten Bilderneuerungsrate zu erzeugen, ist sehr aufwendig und dem Anschein nach in absehbarer Zeit nicht so einfach möglich, insbesondere unter dem Aspekt, dass bei einem operativen Einsatz leichte Bewegungen der Kamera eine pixelweise Auswertung kontinuierlich erfasster Bilder nicht zulassen.

Die DE 10 2006 001 634 B3 beschreibt ein Erstellen eines Abstandbildes mit Hilfe von Stereo- Kameras.

Aus der DE 10 2007 030 781 A1 ist ein Verfahren zur Texturierung virtueller dreidimensionaler Objekte bekannt, bei dem sämtliche Rohtexturelemente bei Vorliegen eines vordefinierten Ähnlichkeitsmaßes durch Bibliothekselemente ersetzt werden können.

Ein Verfahren und ein System zur Aufnahme und zum Repräsentieren von 3D- Geometrien, Farbe und Schatten von animierten Objekten wird mit der DE 699 32 619 T2 (EP 1 093 616 B1) offenbart.

Die DE 696 35 980 T2 (EP 0 804 779 B1) beschäftigt sich mit einem Verfahren und einer Vorrichtung zur Detektion von Objektbewegungen in einer Bilderfolge.

Eine 3D- Bildtextruierung und -schattierung wird mit der DE 696 10 341 T2 (EP 0 725 366 B1) publiziert.

Hier stellt sich die Erfindung die Aufgabe, ein System der eingangs genannten Art aufzuzeigen, mit dem eine verbesserte Zielerkennung mit einfachen Mitteln möglich ist.

Gelöst wird die Aufgabe durch die Merkmale des Patentanspruchs 1. Vorteilhafte Ausführungen sind in den Unteransprüchen aufgelistet.

Der Erfindung liegt die Idee zugrunde, die aus modernen Grafikkarten bekannte Darstellung von Schattenwirkungen zu invertieren und die Oberflächenstrukturen unbekannter Objekte aus ihren Schattenbildern abzuleiten, wobei auf Basis der Schattenwirkung und der bekannten Oberflächenstruktur des Referenzobjekts die Lichtquelle(n) ermittelt werden / wird. Ist nämlich die Beleuchtungssituation der aufgenommenen Szene bekannt, können die Oberflächenstrukturen unbekannter Objekte aus ihren Schattenbildern abgeleitet werden.

Bei diesem Prozess wird also in dem Flächenbild der Kamera eine Art Reliefwirkung erzeugt, so dass im Flächenbild Konturen erfasst werden können. Damit können die bekannten Verfälschungen, bedingt durch Schattenbildung, ermittelt und behoben bzw. alternativ auch genutzt werden.

In einer ersten Variante werden vom Bild die Konturen abgegriffen und die Schattenwirkungen auf die Grafikkarte gegeben. Diese macht daraus eine 3D- Abbildung bzw. ein pseudo 3D im Pixelbereich. Dieses wird mit einem so genannten Normbild (schattenlos) verglichen.

Alternativ kann in einer weiteren Variante mit Hilfe des Systems dem Normbild eine Schattenwirkung aufgesetzt werden, um dieses dann mit dem aufgenommenen, Schatten enthaltenden Bild vergleichen zu können.

Der Vorteil liegt darin, dass die gewünschten Informationen ausschließlich aus dem Flächenbild gewonnen werden können. Ein zusätzlicher Sensor für die Entfernungsmessung bzw. Entfernungsberücksichtigung im System ist nicht erforderlich.

Anhand eines allgemeinen Ausführungsbeispiels mit Zeichnungen soll die Erfindung näher erläutert werden. Es zeigt:
- Fig. 1: ein Blockschaltbild des Systems,
- Fig. 2: eine Skizze der Schattenwirkung am Referenzobjekt,
- Fig. 3: Halbschattenkanten in einer einfachen Skizze,
- Fig. 4: ein Blockschaltbild einer weiteren Variante.

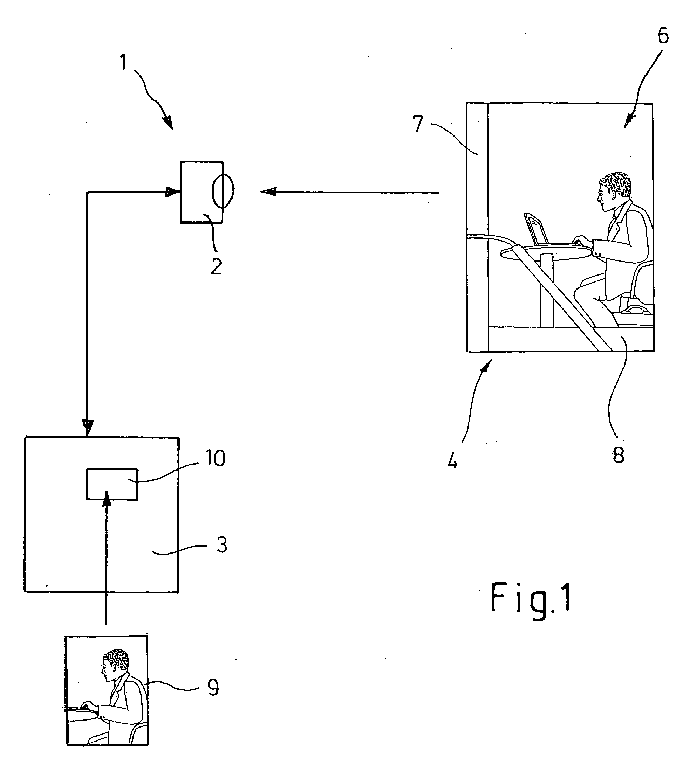

Das System 1 besteht aus einer vorzugsweise hoch auflösenden Kamera 2 (ein optisches System) und einem Auswerterechner 3 zur Verarbeitung der aufgenommenen Bilder 8 (Fig. 1, der Übersichtlichkeit halber hier ohne Schatten und ohne Bewegung dargestellt). Mit der Kamera 2 wird eine (eingestellte) Szene 4 überwacht, um mögliche Zielobjekte 6 erfassen zu können. Zu Beginn der Überwachung wird an einem Referenzobjekt 7 im Sichtfeld die Schattenwirkung in der Szene 4 analysiert. Aufgrund dieser Information werden bei jedem aufgenommenen Bild 8 in Echtzeit, die entspricht der Bilderneuerungsrate, die Schattenwirkungen erfasst. Das Bild 8 des ausgewählten Zielobjekts 6 wird dann mit dieser Information auf ein Standardformat gebracht, damit es mit Normbildern 9 verglichen werden kann. Diese sind beispielsweise im Speicher 10 der Bildverarbeitungseinheit 3 bzw. des Auswerterechners hinterlegt.

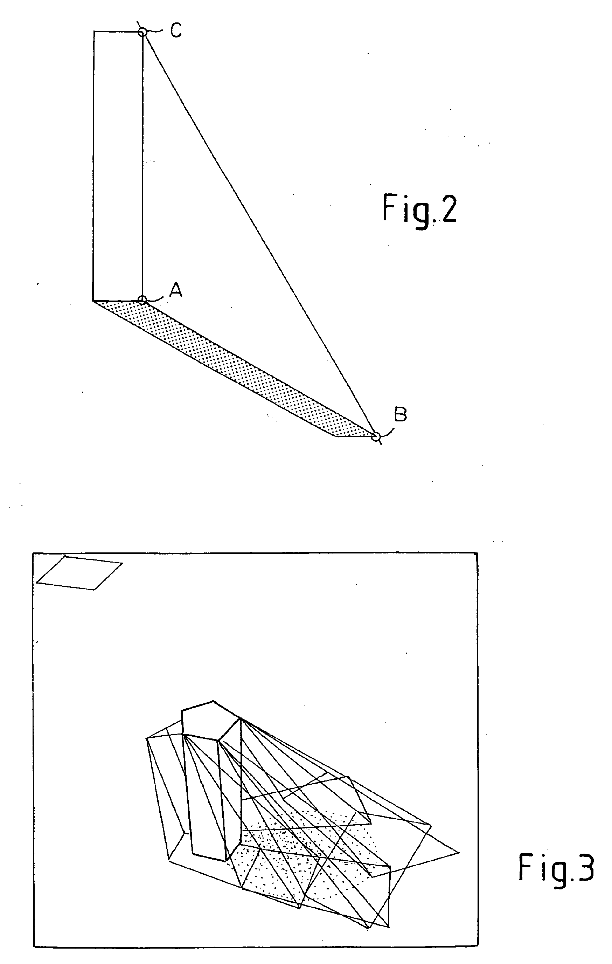

Das Prinzip der Ermittlung bzw. Analyse der Schattenwirkung an einem x- beliebigen Referenzbild bzw. in einer aufgenommenen Szene (4) an einem Referenzobjekt (7) soll im Folgenden kurz skizziert werden (Fig. 2):

Die Raumkoordinaten des optischen Vermessungssystems (2) sind in der ausreichenden Genauigkeit bekannt. Die Richtungswinkel der Punkte A, B, C bezogen auf die Position eines optischen Systems (2) werden durch Anrichten berechnet, die Entfernungen der Punkte beispielsweise durch einen Entfernungsmesser (Laserentfernungsmesser) ermittelt. Durch Triangulation werden die Raumkoordinaten berechnet. Dadurch kann die Lichtrichtung (als Gerade durch die Punkte B und C) ermittelt werden. - Hierbei wurde von einer punktförmigen Lichtquelle ausgegangen.

Tatsächlich treten bei realen Szenen (4) im Wesentlichen flächige Lichtquellen auf. Daher gibt es in der Realität nicht nur den dargestellten Kernschatten, sondern auch die Halbschatten. Diese Tatsache ist nun bei der Auslegung des Systems (1) zu berücksichtigen. Die auftretenden Schattenbereiche werden im Bild (Fig. 3) markiert, um die Lichtquellen nach diesem Prinzipverfahren zu ermitteln.

Bei bekannter Oberflächenstruktur des Objekts und Lichtquelle wird also herkömmlich eine realistische Schattenwirkung simuliert. - Dieses Prinzip wird in der vorliegenden Lösung nunmehr invertiert - auf Basis der Schattenwirkung und der bekannten Oberflächenstruktur des Referenzobjekts werden / wird die Lichtquelle(n) ermittelt. Oberflächenstrukturen unbekannter Objekte können bei Kenntnis der Beleuchtungssituation der aufgenommenen Szene (4) aus ihren Schattenbildern abgeleitet werden. Dazu muss nur die Position des Zielobjekts (6) im Raum durch das optische System (2) vermessen werden.

Der Prozess der Zielerkennung selbst läuft daher wie folgt ab:

Im Szenenbild der Kamera 2 wird das zu erkennende Zielobjekt 6 mit einer Art Trackingfenster 10 markiert. Das optische System 2 verfolgt das Zielobjekt 6 automatisch (nicht näher dargestellt). Durch Auswertung der Graustufen in den Schattenzonen des Bildes 8 wird eine Oberflächenstruktur des Zielobjektes 6 ermittelt. Mit Hilfe der Oberflächenstruktur wird das Bild 8 auf ein Standardformat abgebildet, um den Vergleich mit den abgespeicherten Normbildern 9 zu ermöglichen. Das System stellt einen Abgleich mit den Normbildern 9 her und identifiziert das Ziel 6 automatisch. Auch bei fehlender Übereinstimmung mit den Normbildern wird dieses Ergebnis mitgeteilt.

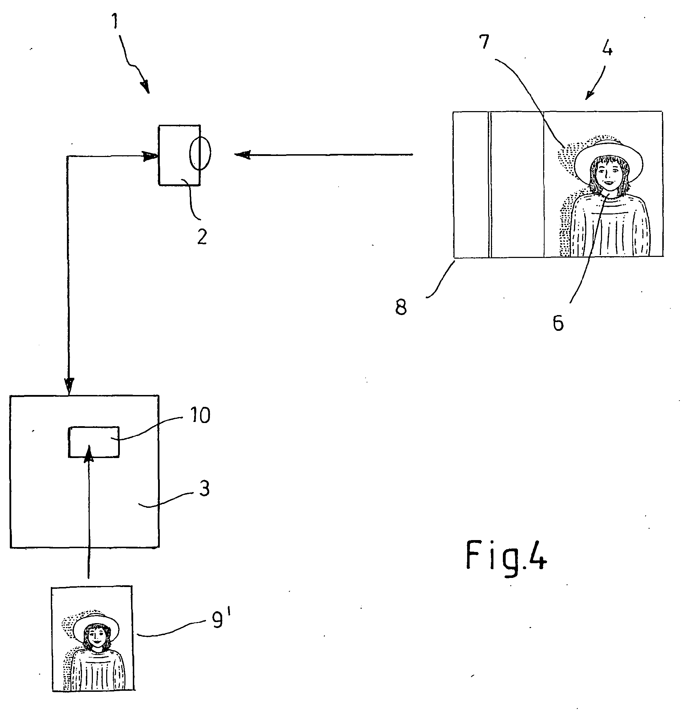

Alternativ zu diesem Zurückrechnen der Schattenwirkung auf Normbildern 9 können die Normbilder 9 mit einer aus den Bildern 8 bekannten bzw. analysierten Schattenwirkung bereichert werden. Dies erfolgt dadurch, dass festgelegt wird, unter welchem Lichteinfall das Bild 8 mit Schattenbildungen gemacht wurde, um das Normbild 9' mit gleicher Schattenwirkung zu erzeugen (Fig.4).

Die so geschaffenen Normbilder 9' können ihrerseits zum Vergleich mit den aufgenommenen Bildern herangezogen werden. Bevorzugt werden beide Varianten miteinander kombiniert bzw. verknüpft. Dies erhöht die bessere Zielerkennung.

Anwendung kann dieses System bzw. Verfahren neben der Nutzung zur Auswertung von Bildern unter dem Aspekt biometrischer Daten als auch zur Gewinnung von Bildern zu Ausbildungs- und Trainingszwecken, wie in der DE 10 2008 005 604.9 beschrieben, finden. Weitere Einsatzgebiete ergeben sich anhand der Vorteile.

## Patentansprüche

1. System (1) zur verbesserten Zielerkennung von Zielobjekten (6) in einer Szene (4), aufweisend ein optisches 2D- System (2) zur Aufnahme 2D- Bilder (8) mit den Zielobjekten (6) und eine dem optischen System (2) nach geschalteten Bildverarbeitungseinheit (3), wobei
• Normbilder (9) möglicher Zielobjekte in der Bildverarbeitungseinheit (3) hinterlegt sind,
• die Normbilder (9) schattenlos sind bzw.
• den Normbildern (9') Schattenwirkungen äquivalent der aufgenommenen Bilder (8) mit Schattenbildung aufgesetzt werden und
• die Normbilder (9, 9') zum Vergleich mit den aufgenommenen Bildern (8) herangezogen werden.

2. Verfahren zur verbesserten Zielerkennung von mit Hilfe eines optischen 2D- Systems (2) aufgenommenen Bildern (8) einer Szene (4) mit Zielobjekten (6) mit den Schritten:
• Aufnahme einer Szene (4), um die Zielobjekte (6) erfassen zu können,
• Analyse der Schattenwirkung in der Szene (4) anhand eines Referenzobjektes (7) in der Szene (4),
• Ermitteln der Lichtquelle(n) auf Basis der Schattenwirkung und der bekannten Oberflächenstruktur des Referenzobjektes (7)
• Vergleich des ausgewählten Zielobjektes (6) mit Normbildern (9, 9').

3. Verfahren nach Anspruch 2, **dadurch gekennzeichnet, dass** die Oberflächenstruktur des Zielobjektes (6) durch Auswertung der Graustufen in den Schattenzonen des Referenzobjektes (7) ermittelt wird.

4. Verfahren nach Anspruch 2 oder 3, **dadurch gekennzeichnet, dass** das Zielobjekt (6) zum Vergleich auf ein Standardformat gebracht wird und / oder dem Normbild (9') Schattenwirkungen äquivalent der aufgenommenen Bilder (8) mit Schattenbildung aufgesetzt werden.
